(19) **Europäisches Patentamt**

**European Patent Office**

**Office européen des brevets**

(11) **EP 0 507 541 B1**

(12) **EUROPEAN PATENT SPECIFICATION**

(45) Date of publication and mention
of the grant of the patent:
**18.12.1996 Bulletin 1996/51**

(51) Int Cl.6: **H04N 5/33**, H04N 5/335,
H04N 5/217, G11C 27/02

(21) Application number: **92302814.6**

(22) Date of filing: **31.03.1992**

(54) **Infrared focal plane array processor with integrator and low pass filter per pixel**

Verarbeitungsschaltung mit Integrator und Tiefpassfilter für jeden Pixel einer infraroten
Bildebene-Matrix

Circuit de traitement avec intégrateur et filtre passe-bas pour chaque pixel d'une matrice de plan focal
infrarouge

(84) Designated Contracting States:
**DE FR GB IT NL**

(30) Priority: **04.04.1991 US 680500**

(43) Date of publication of application:
**07.10.1992 Bulletin 1992/41**

(73) Proprietor: **TEXAS INSTRUMENTS
INCORPORATED
Dallas Texas 75265 (US)**

(72) Inventor: **Dudley, Dana
Dallas, Texas 75248 (US)**

(74) Representative: **Nettleton, John Victor et al
Abel & Imray
Northumberland House
303-306 High Holborn
London, WC1V 7LH (GB)**

(56) References cited:
**EP-A- 0 137 704      FR-A- 2 599 529
GB-A- 2 186 146      US-A- 4 338 633
US-A- 4 805 025**

Note: Within nine months from the publication of the mention of the grant of the European patent, any person may give
notice to the European Patent Office of opposition to the European patent granted. Notice of opposition shall be filed in
a written reasoned statement. It shall not be deemed to have been filed until the opposition fee has been paid. (Art.
99(1) European Patent Convention).

# Description

## BACKGROUND OF THE INVENTION

### FIELD OF THE INVENTION

This invention relates to a signal processor circuit for use individually in conjunction with each pixel of a focal plane array (FPA) to improve the signal to noise ratio of the output of each pixel of the array.

### BRIEF DESCRIPTION OF THE PRIOR ART

Focal plane arrays and particularly focal plane staring arrays are composed of a plurality of infrared detector elements or pixels in a matrix arrangement (e.g., 64 pixels x 64 pixels) which are generally cooled to a temperature in the range of liquid nitrogen (77°K.). The array is stationary so that each element of the array continually stares at the same portion of the scene. Since nothing is changing, advantage of this fact is taken by performing integration over some period of time, it being apparent that the longer the integration, the more the signal will build with respect to the noise. This is due to the fact that the signal level is multiplied by the amount of time that integration takes place whereas the noise is multiplied by the square root of time and is therefore smaller, thereby improving the signal to noise ratio.

Each detector element includes a capacitor which accumulates charge thereon from a portion of the scene under observation, the time accumulation of charge resulting in an integration. Both signal and noise current are integrated onto the capacitor. It is desirable that the capacitors be large so that they can hold more charge and permit integration over extended periods of time as indicated above. However, the capacitance of capacitors is area dependent, so large value capacitors require large device area relative to the size of each pixel and cannot be easily accommodated as a part of the array. For this reason, the capacitors are generally very small and accommodated as part of the array.

Since the capacitor charging signal current can be rather large, it follows that the small capacitance value capacitor can only integrate for a given possibly relatively short time before the voltage across the capacitor becomes so large that the capacitor can no longer handle further accumulated charge thereon. This means that a substantial portion of the potential charging time is not used and is wasted. This provides uncertainty in the result of the integration.

It is desirable that integration of a signal at each pixel of a detector which is focussed upon a given small area of a scene take place for a period as long as possible and, in any event, over an extended period of time so that the noise provides a relatively small amount of the total signal and thereby diminishes its effect thereon.

FR-A-2 599 529, on which the preamble of claim 1 is based, discloses an arrangement in which an infrared photodiode of a detection panel is connected to an associated input circuit of a processing panel, the two panels being used in a thermal camera used for imagery. The input circuits of the processing panel are integrated on a silicon substrate.

The photodiode has its cathode connected directly to through the channel of a first field effect transistor to a first region of the integrated circuit constituting a integration capacitor. The integration capacitor is connected by way of a switch to a second, larger, storage capacitor formed in the integrated circuit.

The present invention provides a focal plane array circuit member comprising:

(a) a pixel of predetermined area providing a charge in response to impingement of radiation thereon;
(b) a charge storing circuit for storing said charge responsive to reception of said radiations by said pixel;
(c) switch means for periodically transferring charge from said charge storing circuit and then discharging said charge storing circuit;
(d) storage means for storing said transferred charge; and
(e) an output terminal; **characterized in that**
(f) a low pass filter is coupled between said output terminal and said storage means, **and in that**

said structure of (b) through (f) displaces an area in a single semiconductor chip substantially the same as the area of said pixel.

## SUMMARY OF THE INVENTION

In accordance with the present invention, the signal-to-noise ratio of a staring array of infrared detectors is improved by integrating over substantially the entire available signal receiving period. This is accomplished by periodically integrating the received signal, reading out a partial integration before overloading the integrating capacitor, discharging the integrating capacitor and then commencing charging of the integrating capacitor, this cycle being continually repeated. This is achieved while being able to dispose all or most of the readout integrated circuit required for integration within the area under each of the sensing elements or pixels of the array. The unit cell or the circuitry associated with each pixel repetitively integrates the incoming signal and the bias signal and background current onto a capacitor which is sufficiently small to fit beneath the associated pixel. The circuit samples each integration and then low pass filters the train of sampled data with an RC filter using large resistances and small capacitances. Since the equivalent circuit using large resistances and small capacitances requires less integrated circuit area than does small resistances and large capacitances, the desired result can be achieved. This concept is applicable to both photon or resistance bolometer (thermal) detectors.

More specifically, each cell or pixel of the array generates current proportional to the amount of infrared radiation impinging thereon and charges a first capacitor. Periodically, the charge on the capacitor is amplified and passed through a sample and hold switching element to a second capacitor and the first capacitor is discharged through a reset switch. The charge on the second capacitor is amplified and fed to a low pass filter having large resistance, of the order of $10^9$ ohms, and small capacitance, of the order of $10^{-12}$ to $10^{-13}$ farads, which substantially removes the noise in the signal and passes the noise-free signal onward to appropriate circuitry.

## BRIEF DESCRIPTION OF THE DRAWING

FIGURE 1 is a schematic depiction of a focal plane array with a plurality of pixels in a matrix arrangement;

FIGURE 2 is a circuit diagram of a single pixel with circuitry associated therewith in accordance with the present invention;

FIGURES 3(a) to 3(c) are diagrams of the signals at stated locations in the circuit of FIGURE 2; and

FIGURE 4 is a circuit diagram showing how resistor 25 of FIGURE 2 would be implemented using diodes.

## DESCRIPTION OF THE PREFERRED EMBODIMENT

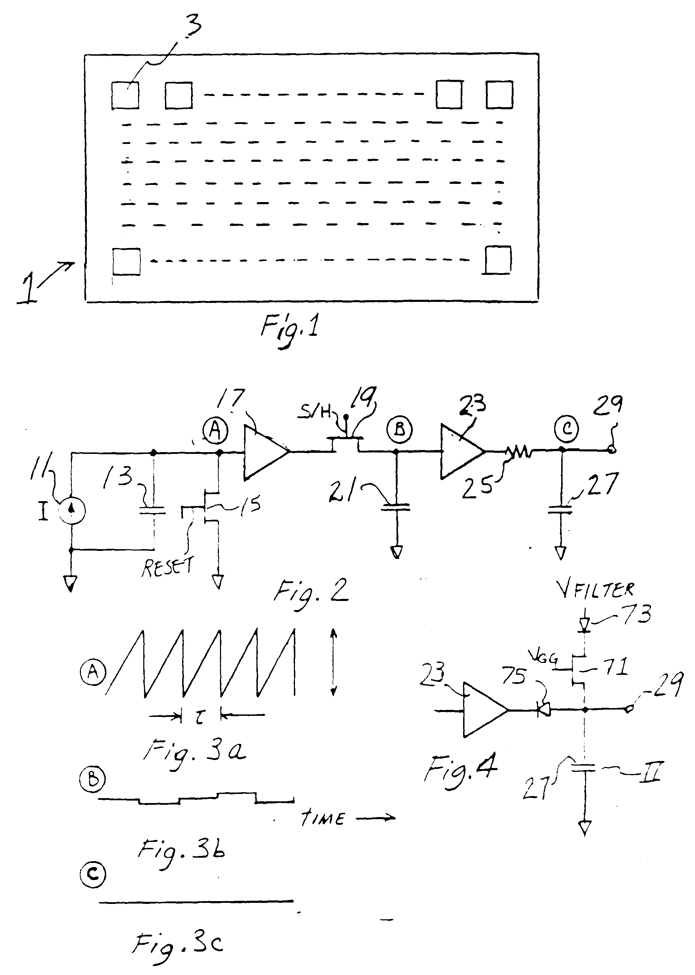

Referring first to FIGURE 1, there is shown a top view of a focal plane array 1 having a plurality of pixels 3 arranged therein. Each pixel 3 is coupled to separate electronic circuitry (not shown in FIGURE 1) which is disposed either in the wafer containing the focal plane array and generally below the associated pixel or in a separate wafer to which the wafer containing the focal plane array is secured in known manner.

Referring now to FIGURE 2, there is shown one of the pixels 3 of FIGURE 1 which is depicted as a current source 11 and an integrating capacitor 13. The current source 11 represents the sum of the dark current and the photocurrent generated by the impingement of infrared radiations on the pixel, this generated current charging the integrating capacitor 13. The charge on the integrating capacitor 13 continues to build up for a predetermined time period, after which the sample and hold transistor switch 19 is rendered conducting and the charge on the capacitor 13 is amplified by amplifier 17, passes through the switch 19 and charges up capacitor 21. At this time, the sample and hold switch 19 is closed and the reset transistor 15 is turned on to discharge the capacitor 13 whereupon the reset transistor is again opened and the charging cycle for capacitor 13 is repeated. The charge on capacitor 21 is amplified through amplifier 23 and then passes through a low pass filter composed of resistor 25 and capacitor 27 and then passes to the output terminal 29 for transmission to other circuitry as required.

The purpose of the integrating capacitor 13 is to elevate the voltage noise at point A at the input to amplifier 17 over the noise generated by the amplifier 17 and KT/C sampled Johnson noise stored on the capacitor. It can be seen that the KT/C noise can be diminished by increasing the capacitance of capacitor 13. However, as stated above, an increase in capacitance of capacitor 13 requires that a larger portion of the region of the semiconductor material under the associated pixel be utilized. Due to small pixel dimensions, this portion of the region is small and limits the capacitance obtainable. Accordingly, the problem arises that the capacitance of capacitor 13 cannot be made large enough to integrate over several milliseconds in order to improve the signal to shot noise ratio. To alleviate this problem while still utilizing the small capacitance value, the low pass filter composed of resistor 25 and capacitor 27 is provided using a very large resistor. The resistance can be achieved in any known manner, such as, for example, by using forward biased diodes (described in US-A-5 144 133) or by using almost undoped polysilicon which has been doped to a level to provide the desired resistance based upon the dimensions of the polysilicon region itself.

In operation, the charge on capacitor 13 which is at point A is shown in FIGURE 3(a) where It/C is the average signal pedestal and where t is typically 5 microseconds. The integrated and sampled noise train at the capacitor 21 or at point B is shown in FIGURE 3(b) where it can be seen that most of the noise has been removed. The output of the circuit at point C is shown in FIGURE 3(c) where it can be seen that substantially all of the noise has been removed.

At point B, the integrator noise spectrum is indicated by:

$$V_N^2(f) = \frac{qIt^2 \sin^2 ft}{C^2 (ft)^2}$$

Integrating over frequency yields:

$$V_N = \frac{(qIt)^{1/2}}{C}$$

$$V_{S\ low\ freq} = \frac{It}{C}$$

At point C, for t << 1/delta f:

$$V_N = (qI/\ )^{1/2}\ \frac{t}{C}\ (delta\ f)^{1/2} \qquad (band\ limited\ noise)$$

$$V_{S\ low\ freq} = It/C$$

It follows that the signal to noise improvement from point B to point C is $( /t\ delta\ f)^{1/2}$ which is a large improvement over prior art integrator and switch capacitor techniques.

The technique for providing a resistor which has such a large resistance that the noise developed is at very low frequency and can be filtered out using diodes is described in US-A-5 144 133 (EP-A-0 507 542).

Referring now to FIGURE 4, there is a circuit diagram showing how resistor 25 of FIGURE 2 would be implemented using diodes. As can be seen, the resistor 25 of FIGURE 2 is disposed between amplifier 23 and output terminal 29 with capacitor 27, which could be a MOSFET, coupled between terminal 29 and reference voltage. The resistor 25 is implemented using a cascode transistor 71 having a gate coupled to a voltage source $V_{GG}$, a source coupled through a diode 73 to a filter voltage source $V_{filter}$ and a drain coupled to the output terminal 29. A diode 75 has its anode coupled to the output terminal 29 and its cathode coupled to the output of amplifier 23.

The operation of the circuit of FIGURE 4 is explained hereinbelow. The large band limiting time constant (about 2 ms) for the filter composed of resistor 25 corresponding to diode 75 and capacitor 27 is achieved with a forward biased diode 75 and the small standard MOS gate capacitance of 0.35 pF of capacitor 27. Using a diode bias current of about 5 pA, the required dynamic resistance of $6 \times 10^9$ ohms is achieved. The biasing current is provided by a second forward biased diode 73 in conjunction with the cascode MOSFET 71. The MOSFET is used for its extremely high ($>10^{13}$ ohms) drain impedance, while the diode 73 is used as a high impedance source to suppress effects from MOSFET threshold variations and noise by limiting its gain. Both diodes 75 and 73 could be replaced by large resistors, but one must be precisely controlled. Also, by using diodes, the frequency roll-off is controlled by adjusting the bias voltage and thereby the current in the diodes.

It is noted that the above described circuitry in FIGURE 3 can also be used to improve the signal to noise ratio using a bolometer matrix wherein, instead of photo current, the signal current is generated by temperature changes in a current-biased resistor or diode sensing element (a thermal detector). In this case, the current source 11 of FIGURE 2 is replace by a resistive element with a bias thereacross to permit current to flow and be stored on the capacitor 13.

It is further noted that if the sensing element resistance is sufficiently high, such voltage signal and noise is high without the integration and sampling functions may not be required. In this case, a resistive load would be used followed by a preamplifier and a low pass filter.

Though the invention has been described with reference to specific preferred embodiments thereof, many variations and modifications will immediately become apparent to those skilled in the art. It is therefore the intention that the appended claims be interpreted as broadly as possible in view of the prior art to include all such variations and modification.

## Claims

1. A focal plane array (1) circuit member comprising:

   (a) a pixel (3) of predetermined area providing a charge in response to impingement of radiation thereon;
   (b) a charge storing circuit (13) for storing said charge responsive to reception of said radiations by said pixel (3);
   (c) switch means (15, 19) for periodically transferring charge from said charge storing circuit (13) and then discharging said charge storing circuit (13);
   (d) storage means (21) for storing said transferred charge; and
   (e) an output terminal (29); **characterized in that**
   (f) a low pass filter (25, 27) is coupled between said output terminal (29) and said storage means (21), **and in that**

   said structure (13, 15, 19, 21, 25, 27) of (b) through (f) displaces an area in a single semiconductor chip substantially the same as the area of said pixel (3).

2. A focal plane array circuit including a plurality of focal plane array circuit members as set forth in claim 1.

3. A circuit as set forth in claim 2, wherein said charge storing circuit (21) comprises a focal plane array detector element including a capacitor (21) for storing charge.

4. A circuit as set forth in claim 2 or claim 3, wherein said switch means (19) includes a transistor (15) coupling said charge storing circuit (13) to a source of reference voltage and a transistor (19) coupling said charge storing circuit to said storage means (21).

5. A circuit as set forth in any one of claims 2 to 4, wherein said low pass filter (25, 27) comprises a resistor (25) disposed between said storage means (21) and said output terminal (29) and a capacitor (27) coupled between said output terminal (29) and said source of reference voltage.

6. A circuit as set forth in claim 5, wherein said resistor (25) has a resistance of the order of $10^9$ ohms and said capacitor (27) has a capacitance of the order of $10^{-12}$ to $10^{-13}$ farads.

**Patentansprüche**

1. Brennebenen-Matrixschaltungsteil (1), enthaltend:

   (a) ein Pixel (3) mit vorbestimmter Fläche, das eine Ladung abhängig davon liefert, daß Strahlung auf es auftrifft;

   (b) eine Ladungsspeicherschaltung (13) zum Speichern der Ladung abhängig vom Empfang der Strahlungen durch das Pixel (3);

   (c) Schaltermittel (15, 19) zum periodischen Übertragen von Ladung von der Ladungsspeicherschaltung (13) und anschließendem Entladen der Ladungsspeicherschaltung (13);

   (d) ein Speichermittel (21) zum Speichern der übertragenen Ladung; und

   (e) eine Ausgangsklemme (29;

   **dadurch gekennzeichnet**, daß
   (f) ein Tiefpaßfilter (25, 27) zwischen die Ausgangsklemme (29) und das Speichermittel (21) gekoppelt ist,
   wobei die Struktur (13, 15, 19, 21, 25, 27) von (b) bis (f) in einem einzigen Halbleiterchip eine Fläche einnimmt, die im wesentlichen gleich der Fläche des Pixels (3) ist.

2. Brennebenen-Matrixschaltung mit mehreren Brennebenen-Matrixschaltungsteilen gemäß Anspruch 1.

3. Schaltung nach Anspruch 2, bei welcher die Ladungsspeicherschaltung (21) ein Brennebenen-Matrixdetektorelement mit einem Kondensator (21) zum Speichern von Ladung enthält.

4. Schaltung nach Anspruch 2 oder Anspruch 3, bei welcher die Schaltmittel (15, 19) einen Transistor (15), der die Ladungsspeicherschaltung (13) mit einer Referenzspannungsquelle koppelt, und einen Transistor (19), der die Ladungsspeicherschaltung mit dem Speichermittel (21) koppelt, enthalten.

5. Schaltung nach einem der Ansprüche 2 bis 4, bei welcher das Tiefpaßfilter (25, 27) zwischen dem Speichermittel (21) und der Ausgangsklemme (29) und einen Kondensator (27) zwischen der Ausgangsklemme (29) und der Referenzspannungsquelle enthält.

6. Schaltung nach Anspruch 5, bei welcher der Widerstand (25) einen Widerstandswert in der Größenordnung von $10^9$ $\Omega$ hat und der Kondensator (27) einen Kapazitätswert in der Größenordnung von

$10^{-12}$ und $10^{-13}$ F hat.

**Revendications**

1. Elément de circuit (1) à réseau plan focal comprenant :

   a) un élément d'image (3) de surface prédéterminée fournissant une charge en réponse à la réception d'un rayonnement sur celui-ci;
   b) un circuit de stockage de charge (13) pour stocker ladite charge en réponse à la réception desdits rayonnements par ledit élément d'image (3);
   c) des moyens de commutation (15,19) pour transférer périodiquement une charge dudit circuit de stockage de charge (13) et ensuite décharger ledit circuit de stockage de charge (13);
   d) des moyens de stockage (21) pour stocker ladite charge transférée; et
   e) une borne de sortie (29), caractérisé en ce que :
   f) un filtre passe-bas (25,27) est couplé entre ladite borne de sortie (29) et lesdits moyens de stockage (21) et en ce que ladite structure (13,15,19,21,25,27) de b) à f), déplace une surface dans une pastille semiconductrice unique à peu près la même que la surface dudit élément d'image (3).

2. Circuit à réseau plan focal comprenant une pluralité d'éléments de circuit à réseau plan focal selon la revendication 1.

3. Circuit selon la revendication 2, dans lequel ledit circuit de stockage de charge (21) comprend un élément détecteur à réseau plan focal comprenant un condensateur (21) pour stocker une charge.

4. Circuit selon la revendication 2 ou 3, dans lequel lesdits moyens de commutation (19) comprennent un transistor (15) couplant ledit circuit de stockage de charge (13) à une source de tension de référence et un transistor (19) couplant ledit circuit de stockage de charge auxdits moyens de stockage (21).

5. Circuit selon l'une quelconque des revendications 2 à 4, dans lequel ledit filtre passe-bas (25,27) comprend une résistance (25) disposée entre lesdits moyens de stockage (21) et ladite borne de sortie (29) et un condensateur (27) couplé entre ladite borne de sortie (29) et ladite source de tension de référence.

6. Circuit selon la revendication 5, dans lequel ladite résistance (25) a une résistance de l'ordre de $10^9$ ohms et ledit condensateur (27) a une capacité de

**EP 0 507 541 B1**

l'ordre de $10^{-12}$ à $10^{-13}$ farads.

Fig. 1

Fig. 2

Fig. 3a

Fig. 3b

Fig. 3c

Fig. 4